# EUROPEAN PATENT APPLICATION

(11) **EP 3 421 936 A1**
(43) Date of publication of application: **02.01.2019**
(21) Application number: 17179120.5
(22) Date of filing: 30.06.2017
(51) Int. Cl.: G01C 21/26

(54) **OPTICAL MARKER ELEMENT FOR GEO LOCATION INFORMATION**

(71) Applicant: Panasonic Automotive & Industrial Systems Europe GmbH, 63225 Langen (DE)
(72) Inventor: SKUDLAREK, Stefan Jan, 63225 Langen (DE); BECKER, Ralf, 63225 Langen (DE)
(74) Representative: Grünecker Patent- und Rechtsanwälte PartG mbB

(57) **Abstract**

The present invention relates to an improved road infrastructure for vehicle position and orientation detection and a respective system and method. Geo location information is encoded by means of a three-dimensional geometrical structure mounted above the road surface, at a sufficient height for vehicles passing beneath the structure. Scanning of the structures encoding the information is performed optically, preferably by laser (LIDAR) technology. As a mounting support, existing infrastructure elements such as traffic signs or traffic lights can be used. The invention enables a robust and precise determination of location and orientation of the vehicles. The invention enables both encoding and decoding absolute geo location information, as well as relative geo location information, which requires additional information such as a map database and an approximate position/orientation to be determined by another means.

## Description

### FIELD OF THE INVENTION

The present invention generally relates to the field of infrastructure in an outdoor environment for encoding geo location information. More specifically, the present invention relates to an optical marker element for encoding geo location information for vehicle positioning/orientation determination/correction.

### BACKGROUND ART

With the increasing importance of new features such as automated driving, automated mapping and augmented reality, there are constantly increasing requirements for automotive positioning accuracy. This not only refers to the accuracy of the calculated geo-position, but also to the heading/orientation of the vehicle. For instance, in augmented reality even a small heading error of approximately 2° (degrees) is immediately noticeable to a user.

If an HD (High Definition) map with suitable landmarks is available, such positioning accuracy can be achieved with optical sensor (LIDAR laser/camera) triangulation. However, if such information is not available or if the line of sight to the landmarks is blocked, the position has to be calculated starting from the GPS (Global Positioning System) position.

While GPS accuracy may improve to sub-meter level in country/suburban areas using new GBAS (Ground Based Augmentation System) services, such as RTK (Real Time Kinematic), for urban areas (especially urban canyons formed by skyscraper/elevated roads) the quality heavily fluctuates because of GPS reflections. In such areas, the two methods for improving/correcting disturbed GPS position are, on the one hand, data fusion of GPS position with iterative position sensor data such as Gyro, Laser, or CAN, or, on the other hand, a road infrastructure providing geo location/orientation information encoded as (active) broadcast signals or (static) marker patterns.

Roughly speaking, two groups of road infrastructure equipment supporting vehicle positioning by encoding geo location information are known in the art.

The first group works with short range optical, radio (DSRC) or magnetic beacons broadcasting the geo location information encoded to visible light, infra-red, radio or magnetic waves, which are then received by a sensor or plural sensors mounted in or on the vehicle.

For instance, patent US 7, 973, 819 B2 describes a beacon with visible light coding of positional information, with a camera mounted in the vehicle to determine the position of the beacon relative the vehicle to correct the received position. Patent US 4, 983, 984 describes a radio beacon with polarized beams to assure that the radio signal focuses on the lane the broadcast position refers to. The beacon may be mounted directly above the lane. Patent application publication WO 2013/008888 A1 describes a laser measuring the position of the vehicle at a certain time, which is then transmitted to a vehicle via a short range radio beacon. In accordance with patent US 6, 459, 966 B2, information is broadcast via magnetic coils embedded in the road surface.

In other words, the first group employs a road infrastructure including active devices.

Problems associated with this group of infrastructure mean that the beacon often cannot be placed at the location of the vehicle line, thus requiring complicated calculations such as triangulation with the beacons or camera processing for deducing the vehicle position relative to the beacon. Moreover, the line of view to the beacon may be blocked by a huge vehicle, causing signal blackout (for an optical beacon) or errors on triangulation by reflection (for a radio beacon). Further, calculating the difference of heading/orientation of the vehicle relative to the broadcast heading/orientation requires a complicated setup including directed antennas, as well as a complicated processing of beacon signals over a certain time window. Depending on the available processing infrastructure, this may be difficult to achieve.

The second group of road infrastructure equipment for vehicle positioning employs passive information encoding markers to be detected by devices mounted in the vehicle (both passive such as a camera and active such as LIDAR [Light detection and ranging] laser and ultrasonic).

For instance, patent application publication WO 2016/062367 A1 uses visual markers on a wall detected by a camera to place a car automatically for charging. Patent US 5, 002, 145 A describes an autonomous vehicle following a lattice marker structure. Patent application publication US 2015/0292891 A1 uses a marker on the road surface which is detected by a marker detection device. Detected markers are evaluated in combination with map data prestored in the vehicle and vehicle camera captured images of the vehicle environment. The positioning system is configured to determine the location of the vehicle relative to the stored map data. British patent GB 2 523 906 A describes a unified system of active beacons and passive markers to support automated driving.

Further, a similar technology is also used apart from the actual automotive infrastructure. For instance, US patent 7, 765, 027 B2 describes an indoor robot to navigate (i.e. calculate both position and heading/orientation) using information encoded by static markers on the ceiling above the robot, which are scanned via a vertically installed camera.

In other words, the second group employs a purely passive road infrastructure.

Problems of the second group in outdoor automotive environment are, for instance, that the line of view to the marker may be blocked by a huge vehicle, and that markers may be affected by weather (ice and snow) or be covered in dirt (for instance, animal faeces).

It is common for both groups that the vehicle equipment processes the broadcast signal or detects the pattern using on-board sensor devices. After decoding the geo location information encoded therein, the vehicle equipment is able to correct its calculated position/orientation using the provided information.

It is therefore desirable to provide infrastructure installations supporting vehicle positioning fulfilling the following requirements:
- easily visible no matter what other vehicles are on the road
- no or low energy supply
- exposure to weather (rain, ice, snow), exhaust fumes or dirt does not block the broadcast or blur the pattern
- detectable also at night by at least one of the optical sensors (LIDAR, camera, infra-read)
- orientation/distance of vehicle relative to encoded information (position/orientation) easily calculable
- orientation/position of failure can be corrected by the decoded information to a high degree (for instance, for augmented reality position error<30cm (centimetres), heading error<1.5°).

### SUMMARY OF THE INVENTION

The present invention aims to provide improved road infrastructure equipment for encoding geo location information addressing the above needs and being particularly resistant with respect to degradation due to environmental influences, a vehicle position determination system employing the road infrastructure equipment, and a respective method.

This is achieved by the features of the independent claims.

According to a first aspect of the present invention, a marker element for being mounted above the road by a supporting structure is provided. The marker element is adapted to encode geo location information including at least position information by means of a three-dimensional pattern. The three-dimensional pattern is a three-dimensional geometrical structure made from reflective material so as to be optically detectable. The marker element is a physical body including a surface that faces downwards when the marker element is mounted to the supporting structure. The three-dimensional geometrical structure is formed by cavities in the downward facing surface of the marker element so that the geo location information is encoded by including or not including a cavity in each of plural predetermined portions of the downward facing surface, respectively.

According to a second aspect of the present invention, a vehicle position determining system is provided. The vehicle position determining system comprises a marker element according to the first aspect. The vehicle position determining system further comprises a marker element interrogation device mountable to a vehicle for detecting the marker element and reading out the information encoded in the marker element. The marker element interrogation device comprises an optical detector for performing optical recognition processing of the marker element during a time period in which the vehicle is travelling beneath the marker element mounted above the road, thereby reading out the encoded geo location information. The marker element interrogation device further comprises a data processing device for being arranged inside the vehicle, for decoding the read out geo location information and determining the position of the vehicle.

According to a third aspect of the present invention, a method for determining a position of a vehicle travelling along the road using a marker element according to the first aspect mounted on a supporting structure above the road is provided. The method comprises the steps of detecting the marker element by a vehicle mounted device, performing optical recognition processing of the marker element during a time period in which the vehicle is travelling beneath the marker element, with a vehicle mounted optical detector, and reading out the geo location information encoded in the marker element during the optical recognition processing. The method further comprises the steps of decoding the read out geo location information, by a data processing device arranged in or on the vehicle, and of determining the position of the vehicle based on the decoded geo location information by the data processing device.

It is the particular approach of the present invention to encode geo location information by means of passive road marker elements in a three-dimensional manner, employing cavities in a surface. The marker elements are arranged above the road with the encoding surface facing downwards to minimize environmental influence. For mounting the marker elements above the road, existing infrastructure such as traffic signs or lights may be used. Together with a respective optical detection infrastructure, preferably including laser, on the vehicle side, a robust and exact vehicle position determining system is provided.

Preferably, the encoded geo location information further includes orientation information of the marker element. Further, additional cavities are formed in the downward facing surface for marking an orientation of the marker element. The further cavities are arranged in additional predetermined portions of the downward facing surface, different from the plural predetermined portions encoding the geo location information.

Preferably, the encoding surface of the marker element faces vertically downwards. Such an embodiment has the advantage that the decoded geo position is identical to the vehicle position if the vehicle is being driven in the middle of the lane. Moreover, the line of view cannot be blocked.

In an embodiment wherein the encoding surface faces vertically downwards, the optical detector is preferably configured for scanning the marker element with a scanning beam directed vertically upwards with a first opening angle in a direction substantially perpendicular to the travelling direction of the vehicle and a second opening angle substantially in the travelling direction of the vehicle.

In accordance with an alternative embodiment, the encoding surface of the marker element faces downwards so as to be tilted under a predetermined angle, i.e. the encoding surface does not extend in a horizontal plane. In such an embodiment, both the marker element as well as objects on the road level, which have approximately the same height as the vehicle, can be detected with a single optical detector, provided that the detector has a sufficient opening angle (field of view).

In an embodiment wherein the marker element faces downwards so as to be tilted by a predetermined angle relative to the horizontal direction, the optical detector is preferably configured for scanning the marker element with a scanning beam that is directed under a predetermined angle upwards with respect to the road surface in a plane that is perpendicular to the road surface and includes the travelling direction and with a first opening angle in a direction substantially perpendicular to the travelling direction and a second opening angle in the plane including the traveling direction.

In accordance with another preferred embodiment, the marker element encodes absolute geo location information (GPS position and true North heading). This enables a particularly simple processing on the vehicle side, which is, in principle, independent of any data storage.

Alternatively preferably, the marker element encodes relative geo location information. This may, for instance, be an identifier of reference geo location information stored in a map. Alternatively, the difference between the actual position and a reference position in a particular area may be encoded. Encoding absolute geo location information may be impossible due to legal restrictions in some jurisdictions. Further, the data amount (required bit number) may be reduced by encoding relative geo location information as compared to absolute geo location information, without reducing precision.

More preferably, the data processing device further includes map data encoding absolute geo location information corresponding to the relative geo location information determined from the marker element. More specifically, if the encoded geo location information includes an encoded identifier of reference geo location information stored in a map, the absolute position of the vehicle is determined by referring to the reference geo location information associated with the identifier in the map.

Still more preferably, the association between the identifier and the reference position information is not globally unique but it is unique within a predetermined area of the map so that plural instances of the same identifier occur in different areas of the map. An approximate position of the vehicle is obtained by another method such as GPS, and the position of the vehicle is determined based on the reference geo location information associated with the instance of the identifier that corresponds to a position that is located closest to the approximate position of the vehicle obtained by the other method. In other words, the position determination that is made with the help of the marker element serves for correcting an approximate position, such as one determined by GPS.

Preferably, the three-dimensional pattern presents a plurality of bits. More preferably, each of the plural predetermined portions of the downward facing surface encodes a bit of the geo location information, by including or not including a cavity in the respective portion of the surface.

Preferably, each of the predetermined portions of the downward facing surface is a rectangular surface portion, a part of which is covered by the cavity if a cavity is present in the respective portion, and the predetermined portions of the downward facing surface are arranged in a rectangular pattern comprising a predetermined number of lines and a predetermined number of the predetermined rectangular surface portions per line. Hence, if each of the predetermined portions encodes one bit, the number of bits that can be encoded corresponds to the product of the number of lines and the number of predetermined surface portions per line.

In accordance with a preferred embodiment, the optically detectable three-dimensional structure is detectable by laser. The optical detector is a laser scanner. The optical recognition processing is performed by scanning the marker element. Distance measurement by laser is very exact.

Further features and advantages of the present invention are the subject matter of dependent claims.

### BRIEF DESCRIPTION OF THE DRAWINGS

Additional features and advantages of the present invention will become apparent from the following more particular description, as illustrated in the accompanying drawings, wherein:
- Fig. 1a: is an overview drawing showing a marker element according to an exemplary embodiment of the present invention as a physical body;
- Fig. 1b: shows an example of the downward facing encoding surface of an exemplary marker element according to the invention;
- Fig. 1c: shows a further particular example of the encoding surface of a marker element according to embodiments of the invention, with encoding of a particular sequence of bits;
- Fig. 1d: illustrates the encoding of position and information in the encoding surface of a marker element according to exemplary embodiments of the invention;
- Fig. 2a: illustrates general aspects of a vertical scanning scenario in accordance with embodiments of the present invention;
- Fig. 2b: illustrates a rear view of a vertical scanning scenario in accordance with embodiments of the present invention;
- Fig. 2c: illustrates a side view of the vertical scanning scenario in accordance with embodiments of the present invention;
- Fig. 2d: illustrates a bird's eye view of the scanning area in the vehicle coordinate system and the marker area with the encoded geo location data;
- Fig. 3: illustrates a forward scanning scenario in accordance with embodiments of the present invention, wherein a tilted downward facing encoding surface is used;
- Fig. 4: illustrates a map including identifiers for absolute geo location data, to be used in conjunction with marker elements encoding relative geo location data, in accordance with embodiments of the present invention; and
- Fig. 5: is a flowchart illustrating an exemplary method according to embodiments of the present invention.

### DETAILED DESCRIPTION

The present invention generally relates to the topic of road infrastructure encoding geo location information in order to support vehicle positioning correction (including correction of heading/orientation).

The invention uses a particular, three-dimensional static marker included in a marker element to encode geo location information.

The marker is a three dimensional geometrical structure made from reflective (optically detectable, preferably by laser) material. The encoding of the geo location information (orientation and position) is done via cavities (in other words: grooves, recesses, recessions, pits, deepenings) created in the surface of the structure. Besides cavities (grooves etc.) for encoding geo location information, preferably there is a second set of cavities (grooves etc.) that serves to mark the orientation of the orientation information encoded in the marker element.

The marker element is to be placed above the road by the supporting structure (preferably using an existing structure such as a lamp post, a traffic sign bridge, a traffic light or an elevated road/tunnel ceiling) with the encoding surface structure facing downwards. It is specifically noted that this does not only mean "vertically downwards", but in particular embodiments tilted installation is also possible, as will be described below.

A vehicle which is passing below the structure may detect the surface structure using optical sensors such as a LIDAR laser scanning upwards or a stereo (infra-red) camera. In view of the above, it is specifically noted that this does not only mean "vertically upwards" but also tilted scanning (e.g. a sensor where the main detection direction is forward, but with a scanning beam opening also covering structures above the road). Further details will be described below as well.

After measuring the distance and orientation of the marker relative to a car and decoding the geo location information including the position and the orientation of the marker from the scanned cavities, the car may correct its position and heading (orientation).

The setup in accordance with plural embodiments of the present invention described in more detail below offers the following benefits and advantages, thereby avoiding problems that have been discussed above with respect to conventional systems.

Since the information pattern faces downwards, it is better protected from environmental influences such as the weather or animals, which is advantageous as compared to markers on the road surface.

The three-dimensional encoding by cavities avoids blurring of information by environmental influence, for example, exhaust soot stains.

A particular advantage of using laser scanning technology is the easy translation of the decoded geo location information of the marker to the actual vehicle position/heading, since distance measurement by laser (i.e. for determining the distance and relative orientation between vehicle and marker) is very exact.

The orientation and position of the marker relative to the car can be easily deduced with high precision. This is an advantage compared to systems using radio beacons, since a high level of precision can be achieved after correction has been performed using the decoded information.

Since the marker is passive, no energy supply for the marker is required. Hence, the marker may simply be attached to existing structures such as traffic lights or traffic sign bridges, because no additional cabling is required. This renders easy and cheap installation possible, as well as easy maintenance compared to other systems wherein, for instance, radio beacons are used or coils are arranged below the road surface.

The encoding structure according to the present invention is also detectable at night, at least by using LIDAR laser (possibly also infra-red).

In the following, details of non-limiting embodiments of the present invention will be described with reference to the drawings. For simplicity and conciseness of the description, terms such as "upper" or "lower", "top" and "bottom" or similar terms are used, although these are, in principle, relative terms which depend on the orientation of the entity described in space. However, a skilled person is aware of a default orientation of the respective entities, such as the marker element when it is mounted to a supporting structure or what is the "upwards direction" when seen from a vehicle standing on a road.

In the following drawings, the same reference numerals relate to the same or similar entities and a detailed description thereof is not repeated unless there are substantial changes between the individual drawings.

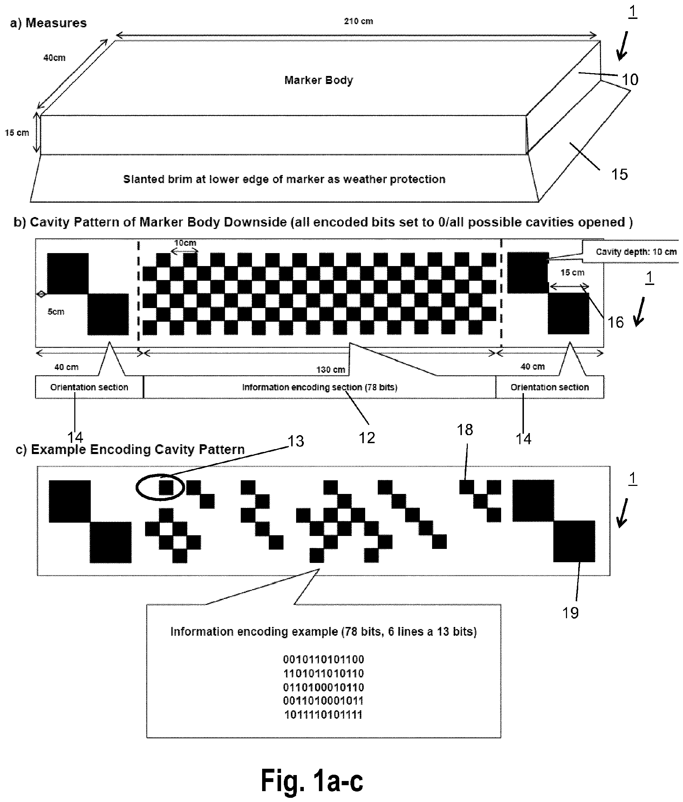

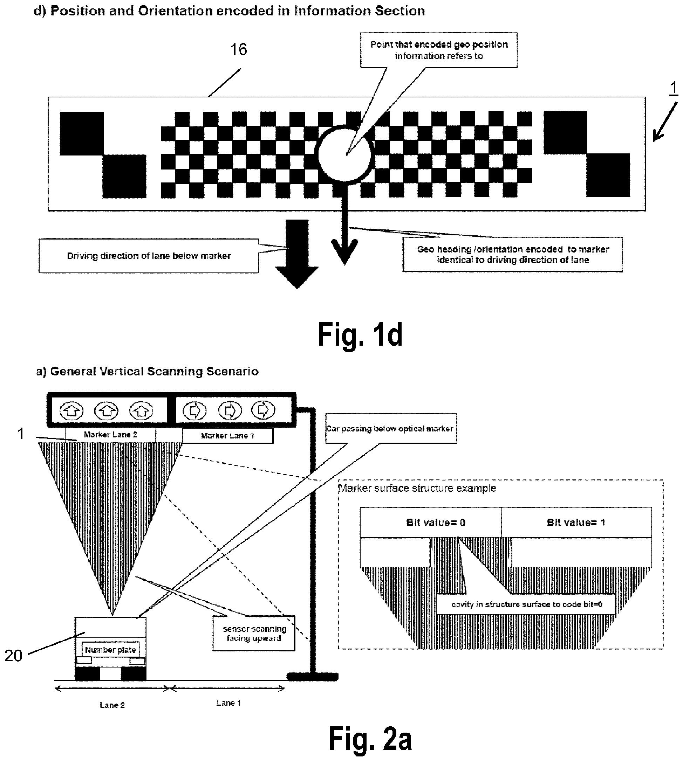

Fig. 1 a provides an illustration of the physical body representing an exemplary marker element 1 according to the present invention.

The marker element comprises a box-shaped marker body 10. Running around the lower edge of the marker body, a slanted brim 15 is arranged that serves as a protection against the weather. The encoding surface is the downward facing, lower surface of the marker body 10 (not visible in the drawing).

The measures of the marker body given in the drawing are exemplary only and by no means considered to be limiting. In the illustrated example, the width of the marker body is 210 cm, the length thereof 40 cm, and the height 15 cm. The slanted brim (in other words: cover or shade) has a width of 10 cm and serves to protect the encoding surface from weather.

The above indicated exemplary measures have been chosen for the following reasons. The width of 210 cm is smaller than the minimum lane width. The length of 40 cm is narrow enough to fit below a traffic light casing so that there is no blocking of the traffic light, and also no edge where, for instance, birds may nest. The height of 15 cm is small enough so that it may be fixed below a traffic light casing without getting near the upper edge of high vehicles such as a truck or bus (even with the brim fixed to the lower edge).

Fig. 1b is a general overview of the cavity pattern arranged on the downside surface 16 of the marker element body. In the width direction of the lower surface 16 of the marker element 1, two orientation sections 14 are arranged near the left and right edges. In the middle between the orientation sections there is an information encoding section 12, which is the portion actually encoding the geo location information.

The cavity pattern is formed by cavities with a minimum depth of 10 cm and a minimum width of 5 cm, which is a sufficient size for being detected by LIDAR laser. More specifically, with the indicated minimum size, current generation LIDAR laser scanners can detect the cavities with high reliability from a distance of 4 m (meters) as a maximum.

The information encoding section, having an overall length of 130 cm in the illustrated example, is the section including the "predetermined portions", each of which either includes a cavity (shown in black color) or does not include a cavity (shown in white). In the illustrated example, each "predetermined portion" consists of two 5 cm x 5 cm quadrangles being adjacent alongside the width direction of the marker element, i.e. it covers an area of 10 cm x 5 cm. Only one half of the area is covered by the cavity (if present, i.e. in case of bit value 0), and the other half of the area is foreseen for assuring bit synchronization.

Out of the quadrangles, only one may be formed as a cavity, thereby encoding the bit "0". If there is no cavity in a "predetermined portion", this predetermined portion encodes the bit "1". However, this is an exemplary bit coding scheme only, and it would be equally possible to use an opposite scheme, wherein the presence of a cavity encodes a bit value of "1" and the absence of a cavity encodes a bit value of "0". The other one of the quadrangles of the predetermined portion, not foreseen for forming a cavity, serves as a spacer (a kind of synchronization mark) between the individual predetermined portions, each encoding a bit. It is noted that in this drawing, which serves to illustrate the overall arrangement, all encoding bits in the information encoding section are set to 0, which means that all possible cavities are opened (shown by black color in the drawing). The white portions in between correspond to the spacers that are not foreseen for including cavities.

The illustrated encoding section 12 has 6 pattern lines with 13 "predetermined portions" each, i.e. for encoding 13 bits per line. The neighboring bit pattern lines are shifted against each other for better alignment of scanning. In other words, while in the first (upper in the drawing) line, the first quadrangle (left in the drawing) is a spacer, always without cavity (shown in white in the drawing), in the subsequent second line (below the first) the first quadrangle encodes a bit (shown in black in the drawing, since all bits are set to 0), whereas the last quadrangle in the line (right in the drawing) is a spacer, and so on. To put it still another way, in the first and each odd numbered line, the cavities encoding the bit 0 are always formed in the right half of each predetermined portion, whereas in the second and each even numbered line, the cavities encoding the bit 0 are always formed in the left half of each predetermined portion.

The orientation sections 14 formed at the end portions of the encoding surface 16, to the left and the right of the information encoding section 12, respectively, serves to determine the relative position and orientation of the vehicle with respect to the marker element 1. In other words, with the help of the orientation portion 14, it can be determined how far away the marker element structure is from the vehicle, and in which angle it is arranged with respect to the forward direction of the vehicle. Hence, the orientation section forms a kind of a "synchronization symbol" or "orientation symbol".

As can be seen, in the exemplary embodiment the orientation sections feature a standard pattern from computer vision (i.e. two diagonally arranged quadrangles of a size 15 cm x 15 cm having a minimum distance of 5 cm from the margin of the marker element) which is implemented as cavities (with a depth of 10 cm as a minimum) instead of surface color. By scanning both patterns, the observing vehicle may fix its orientation relative to the marker as well as the distance between the vehicle and the marker to a high degree. The size of the cavities in the orientation section 14 is given by way of example only and is by no means limiting.

Fig. 1c provides an example of a particular bit sequence encoded by the plural predetermined portions 13 in the information encoding section 12. Since in the illustrated embodiment, the information encoding section comprises 6 lines having 13 predetermined portions corresponding to 13 encoding bits each, an overall number of 78 bits is encoded. Each open cavity, having assigned the reference numeral 18 in Fig. 1c, encoding a bit of 0, is shown in black. For instance, the "first" predetermined portion, i.e. the left and uppermost in the drawing, being indicated by an ellipse and having the reference numeral 13, encodes a bit value "0", since there is a cavity in the right half of the predetermined portion. In the same manner, the second predetermined portion of the first line encodes a "0", and the third predetermined portion of the first line encodes a "1", since there is no cavity in this portion, and so on. The first and second predetermined portions of the second line both encode a "1", since they do not have cavities. The third predetermined portion in the second line encodes a "0", because it has a cavity, which is, in this case in the left half of the predetermined portion, because of the above indicated shift of the bit patterns between the individual lines. The exact sequence of encoded bits is shown in the lower portion of the drawing.

Fig. 1d illustrates the position and orientation encoded in the information section 12 of the encoding surface 16 of the marker element 1. In particular, the position (latitude/longitude/altitude) refers to the point in the middle between the two orientation patterns of the two orientation sections 14, i.e. the point indicated in the drawing as the "point that encoded geo position information refers to". In other words, this is the center point of the marker downward surface.

The orientation (true north) refers to the orientation of the marker structure, which is identical to the driving direction of the lane below the marker.

In order not to complicate the drawing, Fig. 1d shows an encoding surface 16, wherein all bits of the information encoding section 12 have been set to zero, same as in Fig. 1b. Actually, for encoding the information, the 78 bits available in the example of Fig. 1c may be partitioned into 2x27 bits = 54 bits for latitude/longitude, 12 bits for the orientation of the marker (true north), and 12 bits for the altitude above sea level. This means a least significant bit (LSB) position difference (precision) of approximately 20 cm for latitude and longitude, a precision of 0.1° (LSB unit) for the orientation, and a precision of 0.5 m for the altitude, if the range is assumed to be limited to below 1000 m above sea level.

Of course, the more bits that are used, the more precisely the geo location information can be encoded. On the other hand, an enhancement of the number of bits needs more space, and thus increases the necessary area for the information encoding section 12 and thus the overall size of the marker element 1. For instance, in the case of encoding 78 bits in the manner indicated, and as illustrated in Fig. 1a, an overall width of approximately 2 m is necessary.

Fig. 2a is a general drawing showing a vertical scanning scenario, i.e. a situation wherein the encoding surface (not shown) of the marker element 1 faces vertically downwards, and the vehicle 20 is equipped with a sensor that is capable of detecting/scanning with a beam facing vertically upwards, of course, with a certain opening angle/scanning angle.

The marker body 10 is fixed to the downside of the supporting structure (in this example a traffic light) which spans a multi-lane road. The downside of the marker points downwards vertically. One marker is placed above each lane.

The car 20 is passing below the marker element 1, which is fixed to the downside of the supporting structure (in this example: a traffic light). The information is encoded by cavities on the downside of the marker (not shown in this drawing), which are scanned by the sensor mounted in the car so as to scan vertically upwards. Subsequently, the information is decoded.

More specifically, the optical detector, assumed to be a scanning LIDAR laser scanner in this example to be exact, is mounted on the top of the vehicle with the scanning beam axis directed vertically upwards. The LIDAR laser detects the cavities profile of the marker as a cloud of data dots. Each dot consists of distance and spatial angle information relative to the device mounting location. The particular physical structure of the encoding is shown on the right-hand side of the drawing, wherein the depth difference between a portion encoding a bit value of 0 and the rest of the surface, including portions encoding a bit value of 1, is shown.

The spatial opening angle (resolution) of the scanning should be wide enough so that even for a car placed between the lanes or a car heading in a direction that diverges from the lane orientation by less than 24° (such as in the case of a change of lane in the area where a marker element is located), full coverage of the marker pattern by one scanning frame is assured.

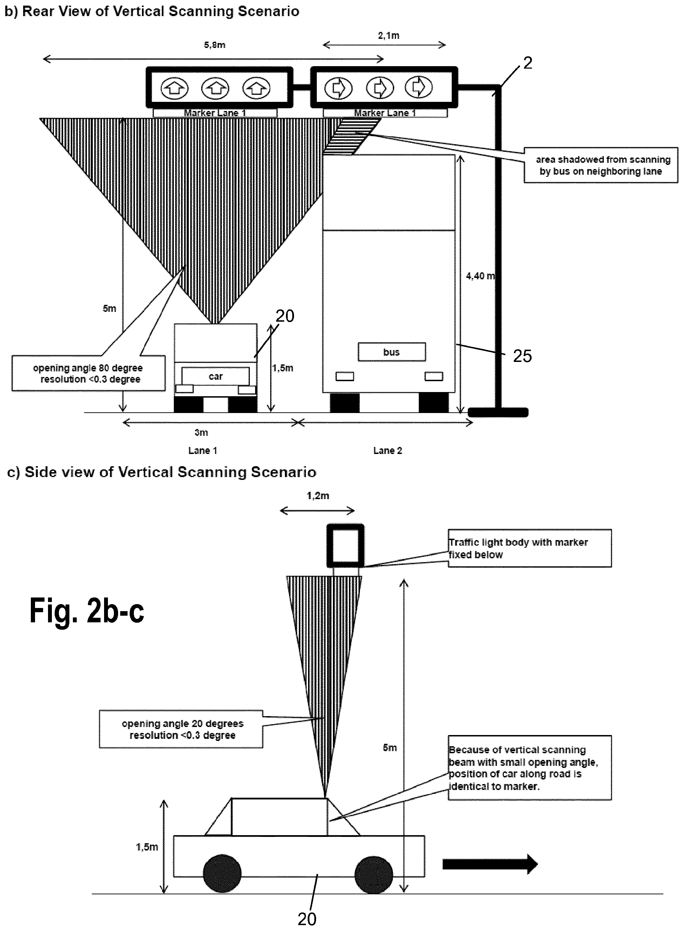

Fig. 2b shows a rear view of the vertical scanning scenario, and Fig. 2c shows a side view of the vertical scanning scenario generally illustrated in Fig. 2a.

As can be seen from the drawings, an opening angle of 80° is assumed sidewards from the vehicle, i.e. in a plane that is perpendicular to the travelling direction, and an opening angle of 20° is assumed to be present in the forward-backward direction, i.e. the travelling direction of the vehicle. The resolution is smaller than 0.3°, which is sufficient for achieving the necessary performance.

In the drawing, and by way of example only, it is assumed that the height of the vehicle 20 is 1.5 m and the height of the encoding surface above the road is 5 m. Accordingly, with the opening angle of 80°, the width of the beam at the height of the encoding surface in the transversal direction is 5.8 m. With the opening angle of 20°, the width of the beam in the longitudinal direction, i.e. the travelling direction is 1.2 m. Because of the vertical scanning beam having only a small opening angle in the travelling direction, the position of the car (i.e. the mounting point of the optical detector on the car) along the road can be assumed to be identical to that of the marker.

The width of each lane is assumed to be 3 m, so that some areas are shadowed from scanning by a bus 25 having a height of 4.4 m and moving in the neighboring lane.

Scanning will be done with at least 35 frames per second, assuming that even at highest speed expected in an urban areas (approximately 60 km/h, corresponding to 17 m/s (meters (m) per second (s))), one scan is done with the scanning beam center within 0.5 m of the point vertically below the marker, capturing the marker in one scan frame.

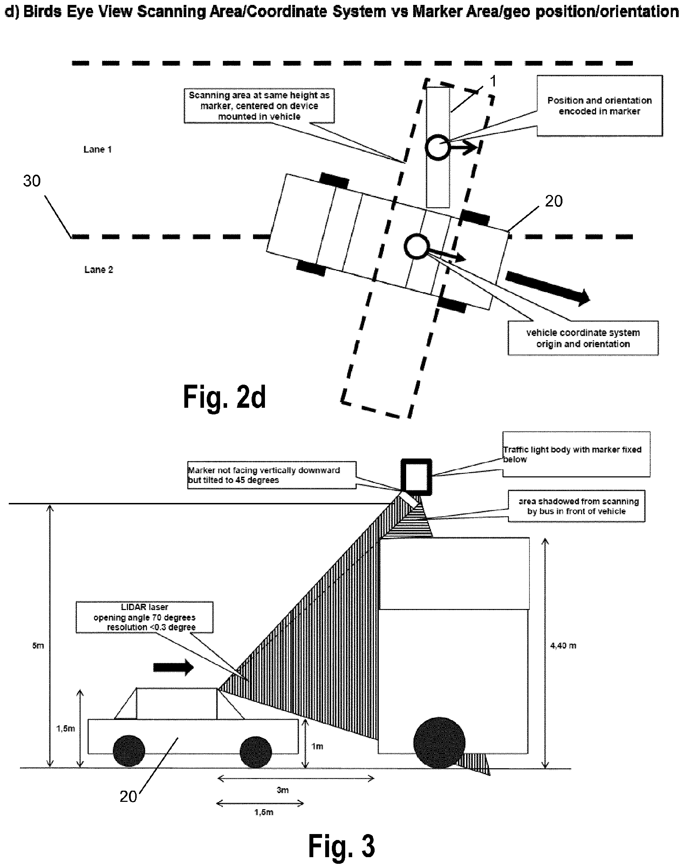

Fig. 2d is a bird's eye view of the scanning area at the same height as the marker. It is noted that this figure shows the vehicle in a different orientation as compared to Figs. 2b and 2c, i.e. in Fig. 2d the vehicle is in the process of changing between lanes 30. The scanning area at the same height as the marker element, centered on the detection device mounted in the vehicle 20, is shown in dashed lines. The origin and orientation of the vehicle coordinate system is shown on the vehicle. The marker 1, as well as the position and an orientation encoded in the marker 1, are shown in solid black lines (above the vehicle in the drawing).

Because of the parallel marker and scanner beam vertical axes, the determination of the vehicle position/orientation only requires a simple difference calculation between vehicle and marker coordinate system. The respective information is gathered from the orientation section of the marker.

In the embodiment described so far with reference to Fig. 2, the marker element 1 is assumed to face strictly vertically downwards, and the scanning beam is assumed to be strictly vertically aimed upwards. While this has the advantage of simplifying the calculation processing, an optical scanning/sensor device is necessary exclusively for scanning/detecting the information from the marker element. In other words, the scanning/sensor device used for reading out the information from the marker element is not able to also detect objects on the road level (of approximately the same height of the vehicle) since the scanning is performed vertically upwards.

Fig. 3 illustrates an alternative embodiment of the invention, wherein a forward detection LIDAR laser (that may be present in the vehicle equipment anyway, for other reasons such as detecting objects on the road level) is used for marker detection. For this purpose, the encoding surface of the marker is arranged so as to not face vertically downwards, but to face downwards by a predetermined angle relative to the horizontal direction. In the illustrated example, the encoding surface of the marker element 1 faces downwards under a tilting angle of 45°, in order to assure an efficient scanning of the cavities 18.

The drawing of Fig. 3 shows a forward scanning LIDAR device tackling a "worst-case scenario". A bus of a maximum allowed height (4.4 m by the EU (European Union)) moves 1.5 m in front of the vehicle 20 (3 m in front of a forward facing LIDAR device installed on the roof of the vehicle 20). The line of sight between the marker element (installed approximately 5 m above the road surface) and the LIDAR is blocked until the vehicle is about 3.5 m away from the marker location.

Calculations show that to scan both the marker and the road ahead, the device would require an opening angle (field of view) of about 70° in the vertical direction (in a plane that is perpendicular to the road surface and includes the travelling direction), while the horizontal field of view, i.e. perpendicular to the travelling direction, would require 80° (the same as illustrated in Fig. 2b for the vertical scanning embodiment).

As indicated, this approach improves the usage efficiency of the LIDAR devices, while keeping the position calculation reasonably simple (since the distance to the marker can be measured via LIDAR with great precision, as long as the distance between the LIDAR and the marker element is only in an order of approximately five meters), although now a difference in three dimensions has to be calculated instead of only two dimensions for vertical scanning.

The LIDAR device used for the embodiment needs to combine 80° horizontal field of view with 70° vertical field of view. This requires a more complicated construction of the LIDAR device, whereas the number of LIDAR devices on the vehicle can be reduced.

As previously indicated, in the simplest case, it is assumed that absolute geo location, i.e. position and orientation, is encoded to assure independence of any data storage.

However, there are situations where such absolute encoding may not be possible.

Obviously, one issue is the size of the marker. As already indicated, a reduction in the number of bits to be encoded leads to a reduction of the overall size of the marker element 1. If, for instance, instead of true (absolute) GPS position information only relative position information is to be encoded, i.e. position information relative to some reference position the absolute location of which is known or can be obtained by other means, a lesser amount of bits is necessary for retaining the same precision. If, for instance, only 20 bits were necessary for encoding the geo location information, the width of the marker element could be reduced to approximately 50 cm, without reducing the precision.

Another issue involves legal restrictions for security reasons. For instance, in the People's Republic of China, GPS coordinates in maps have to be encoded with the 20-30 m shift to avoid compromising the security of military facilities. Therefore, it is unlikely that Chinese city administrations would allow encoding the absolute GPS position/orientation into the marker structure.

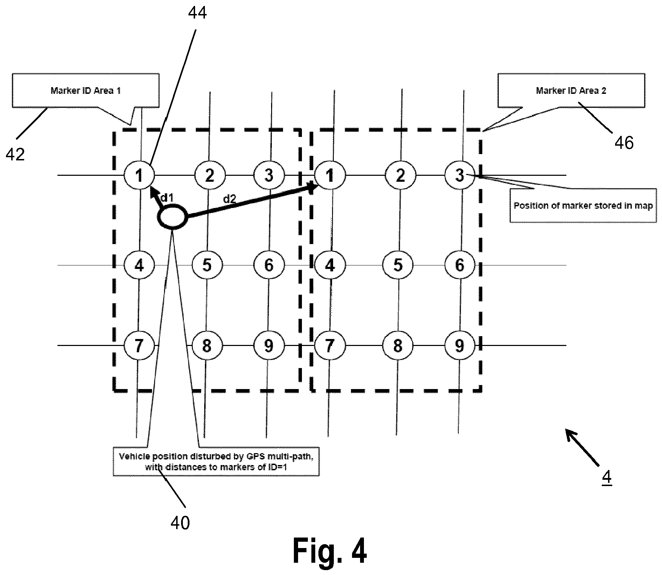

Therefore, according to an embodiment of the invention, the marker only encodes an ID (identifier), whereas the actual GPS position/orientation is encoded in a map (similar to POI (point of interest) information). The map is electronically stored in and controlled by the vehicle equipment i.e. the data processing device arranged in or at the vehicle. An example of such a map is shown in Fig. 4.

In accordance with the embodiment, marker elements 1 each encoding an ID assigned thereto are installed in an area covered by the map 4, such as a city area. The city area is therefore partitioned into marker ID areas, such as marker ID areas 1 (42) and 2 (46) in Fig. 4, wherein in each area IDs 44 within a particular range (in the example of the drawing: 1 to 9) are used. Hence, the IDs 44 are unique only within each area, but the same IDs 44 may be repeatedly used in another area. In other words, several markers 1 with the same ID 44 (several instances of the same ID) are installed in the overall city area.

The map database associated with the map 4 contains marker data, i.e. the ID in association with the corresponding (absolute) position and orientation information. When a certain marker ID 44 is input, together with an approximate vehicle position/orientation (which must be obtained by another means such as GPS), the map database returns the difference of position and orientation between the approximate position/orientation and the position and orientation for all markers 1 (in different marker ID areas) matching the ID 44. In the drawing, the respective differences are symbolically indicated by the arrows labeled "d1" and "d2" extending from the approximate vehicle position 42 to the two instances of marker IDs 44 with the label "1".

In the illustrated example, the overall number of different marker IDs is 9 (arranged in a 3x3 grid in each of the marker ID areas in the map 4), which is a relatively small number used here for keeping the drawing simple. Encoding nine different marker IDs requires four bits. However, with the same amount of bits, also a number of 4x4 = 16 different marker IDs could be encoded. As a skilled person will understand, with encoding of marker IDs instead of absolute geo location information a considerable reduction in the required number of bits can be achieved, and thus the size of the marker element 1 can be considerably reduced.

In an alternative embodiment, relative geo location information encoded in a marker element may comprise, instead of a marker ID, relative position/orientation information of a particular marker with reference to a fixed position/orientation, the exact absolute position and orientation of which is known to the vehicle (for instance because the movement of the vehicle is known to be restricted to a predetermined area in advance). Thereby, the number of bits to be encoded can also be reduced as compared to the case of using absolute geo location information.

It is noted that the above described possibility of encoding only relative geo location information rather than absolute geo location information is not limited to being used in conjunction with the road infrastructure according to the present invention, i.e. marker elements using a three-dimensional geometrical structure for encoding. For instance, a scheme for correcting vehicle position/orientation based on encoded relative geo location information may be used together with any other suitable road infrastructure encoding relative geo location information, for example the above described marker IDs.

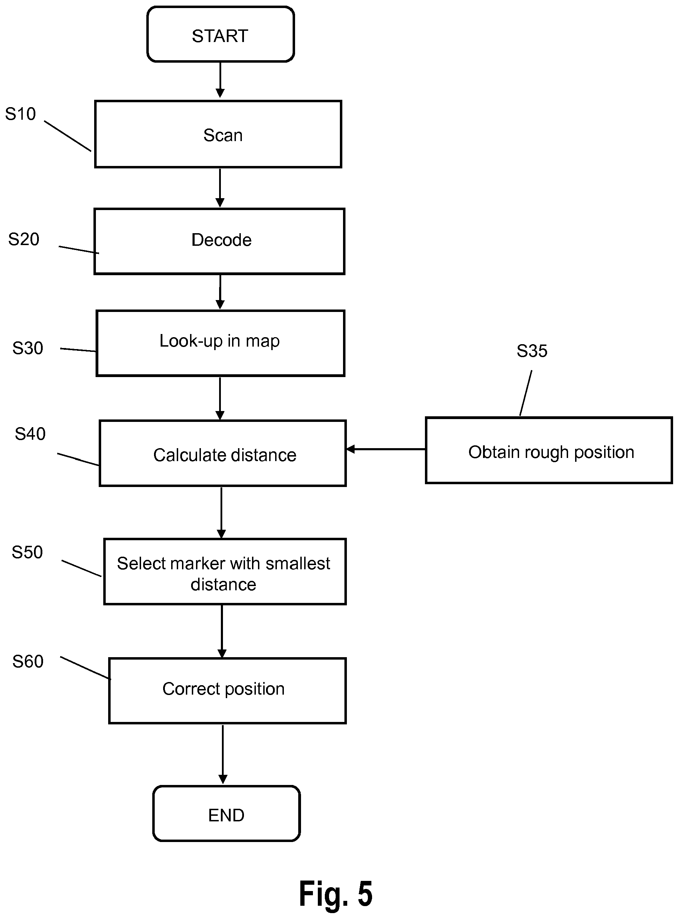

In the following, an exemplary procedure to be performed within the vehicle equipment in the case of encoding relative geo location information by means of marker IDs will be described with reference to Fig. 5.

In a first step (S10) the marker element is scanned by the LIDAR device.

In the following step (S20), the marker ID encoded in the information encoding section 12 is decoded.

Subsequently (S30) the map database 4 is accessed, and a search for markers having the particular ID decoded from the marker (ID 1 in the example of Fig. 4) is made. The map returns a list of markers matching the decoded ID. Approximate position/orientation information is obtained by another method such as by a GPS location device installed in the vehicle (step S35).

On the basis thereof, the difference of position (delta in latitude/longitude) and heading is calculated between the approximate position and the absolute position/orientation information associated with each of the matching markers 44 in the map 4, and the distance between each of the markers having the matching ID and the current approximate car position is calculated (step S40).

In the following step (S50), out of the plural markers having the matching ID located in different marker ID areas, the one is selected that has the smallest distance. In the case illustrated in Fig. 4, this is distance d1, i.e. the corresponding marker is the marker having the identifier ID = 1 and located in the marker ID area 1.

In the final step (S60), the vehicle position and orientation are corrected according to the absolute position and orientation of the marker obtained from the map database.

The present invention as defined by the appended claims is not limited to those particular embodiments that have been described in detail above. In particular, the dimensions (sizes) and angles mentioned in the detailed description and the drawings is exemplary only and the invention is not limited to these particular values. The particular features of embodiments described herein can be combined as long as this does not lead to contradictions. A person skilled in the art is aware of further modifications to the described embodiments within the scope of the claims.

In summary, the present invention relates to an improved road infrastructure for vehicle position and orientation detection and a respective system and method. Geo location information is encoded by means of a three-dimensional geometrical structure mounted above the road surface, at a sufficient height for vehicles passing beneath the structure. Scanning of the structures encoding the information is performed optically, preferably by laser (LIDAR) technology. As a mounting support, existing infrastructure elements such as traffic signs or traffic lights can be used. The invention enables a robust and precise determination of location and orientation of the vehicles. The invention enables both encoding and decoding absolute geo location information, as well as relative geo location information, which requires additional information such as a map database and an approximate position/orientation to be determined by another means.

## Claims

1. A marker element for being mounted above a road (30) by a supporting structure (2), wherein
the marker element is adapted to encode geo location information including at least position information by means of a three-dimensional pattern,
the three-dimensional pattern is a three-dimensional geometrical structure made from reflective material so as to be optically detectable,
the marker element being a physical body (10) including a surface (16) that faces downwards when the marker element is mounted to the supporting structure (2), and
the three-dimensional geometrical structure is formed by cavities (18) in said downward facing surface (16) of the marker element so that the geo location information is encoded by including or not including a cavity (18) in each of plural predetermined portions (13) of the downward facing surface (16), respectively.

2. A marker element according to claim 1, wherein
additional cavities (19) are formed in said downward facing surface (16) for marking an orientation of the marker element, said further cavities (19) being arranged in additional predetermined portions (14) of the downward facing surface (16), different from said plural predetermined portions (13), and
the geo location information further includes orientation information of the marker element.

3. A marker element according to claim 1 or 2, wherein said surface (16) is facing vertically downwards.

4. A marker element according to claim 1 or 2, wherein said surface (16) is facing downwards so as to be tilted by a predetermined angle relative to the horizontal direction.

5. A marker element according to any of claims 1 to 4, wherein said encoded geo location information comprises absolute geo location information.

6. A marker element according to any of claims 1 to 4, wherein said encoded geo location information comprises an encoded identifier of reference geo location information stored in a map (4).

7. A vehicle position determining system comprising:
a marker element (1) according to any of claims 1 to 6,
a marker element interrogating device mountable to a vehicle (20) for detecting the marker element (1) and reading out the information encoded in the marker element (1), the marker element interrogating device comprising:
an optical detector for performing optical recognition processing of the marker element during a time period in which the vehicle (20) is traveling beneath the marker element (1) mounted above the road (30), thereby reading out the encoded geo location information, and
a data processing device for being arranged in or on the vehicle (20), for decoding the read out geo location information and determining the position of the vehicle (20).

8. A system according to claim 7, wherein the encoded geo location information comprises relative geo location information and the data processing device further includes map data encoding absolute geo location information corresponding to the relative geo location information determined from the marker element.

9. A system according to claim 7 or 8, wherein
said surface (16) of said marker element (1) faces vertically downwards, and
said optical detector is configured for scanning the marker element (1) with a scanning beam directed vertically upwards with a first opening angle in a direction substantially perpendicular to the travelling direction of the vehicle (20) and a second opening angle substantially in the travelling direction of the vehicle (20).

10. A system according to claim 7 or 8, wherein
said surface (16) of said marker element (1) faces downwards so as to be tilted by a predetermined angle relative to the horizontal direction, and
said optical detector is configured for scanning the marker element (1) with a scanning beam that is directed under a predetermined angle upwards with respect to the road surface (30) in a plane that is perpendicular to the road surface (30) and includes the traveling direction and with a first opening angle in a direction substantially perpendicular to the traveling direction and a second opening angle in said plane including the traveling direction.

11. A system according to any of claims 7 to 10, wherein said optical detector being a laser scanner, said optical recognition processing being performed by scanning the marker element (1), and said optically detectable three-dimensional geometrical structure being detectable by laser.

12. A method for determining a position of a vehicle (20) traveling along a road (30) using a marker element (1) according to any of claims 1 to 6 mounted on a supporting structure (2) above the road (30), the method comprising the steps of
detecting (S10) the marker element (1) by a vehicle mounted device,
performing (S10) optical recognition processing of the marker element (1) during a time period in which the vehicle (20) is traveling beneath the marker element (1), with a vehicle-mounted optical detector,
reading out (S10) the geo location information encoded in the marker element (1) during the optical recognition processing,
decoding (S20) the read out geo location information, by a data processing device arranged in or on the vehicle (20), and
determining (S60) the position of the vehicle (20) based on the decoded geo location information, by said data processing device.

13. A method according to claim 12, wherein the geo location information includes orientation information of the marker element (1), and said determining step (S60) further determining an orientation of the vehicle.

14. A method according to claim 12 or 13, wherein
the encoded geo location information includes an encoded identifier of reference geo location information stored in a map (4),
said data processing device includes map data representing said map (4), and
said determining step (S60) includes determining an absolute position of the vehicle by referring (S30) to the reference geo location information associated with the identifier in the map (4).

15. A method according to claim 14, wherein
said association between the identifier and the reference position information is not globally unique but is unique within a predetermined area (42) of the map (4) such that plural instances of the same identifier occur in different areas (42, 46) of the map (4),
an approximate position (40) of the vehicle (20) is obtained (S35) by another method, and
said determining step (S30, S40, S50, S60) determines the position of the vehicle (20) based on the reference geo location information associated with the instance (44) of the identifier that corresponds to a position that is located closest (d1) to the approximate position (40) of the vehicle (20) obtained by the other method.
